# EUROPÄISCHE PATENTANMELDUNG

(11) **EP 1 006 347 A2**
(43) Veröffentlichungstag der Anmeldung: **07.06.2000**
(21) Anmeldenummer: 99122797.6
(22) Anmeldetag: 16.11.1999
(51) Int. Cl.: G01N 1/00

(54) **Fahrzeug zum Nachweis von Stoffgemischen, insbesondere Schadstoff- und Kampfstoffgemischen**

(30) Priorität: 16.11.1998 DE 19852701
(71) Anmelder: Henschel Wehrtechnik GmbH, 34127 Kassel (DE)
(72) Erfinder: Heinzemann, Michael Dipl.-Ing., Dipl.-Wirtsch., 34246 Vellmer (DE); Halstrup, Bernhard Christoph Dr. Dipl.-Phys., 34119 Kassel (DE)
(74) Vertreter: Wolf, Jens, Dipl.-Phys.

(57) **Zusammenfassung**

Für ein Fahrzeug zum Nachweis von Stoffgemischen, insbesondere Schadstoff- und Kampfstoffgemischen soll die Meßsicherheit bei der Bestimmung von im Fahrzeugaußenbereich lokal unterschiedlich verteilten Kontaminationen erhöht werden.

Erfindungsgemäß sind hierfür am Fahrzeug ein bodenferner und ein bodennaher Stoffgemischaufnehmer vorgesehen, die über unabhängige, durch die Außenwand des Fahzeuges geführte Transporteinrichtungen das Stoffgemisch zu mindestens einem Analysegerät leiten.

## Beschreibung

Die Erfindung betrifft ein Fahrzeug zum Nachweis von Stoffgemischen, insbesondere Schadstoff- und Kampfstoffgemischen, gemäß Oberbegriff des Anspruchs 1.

Von Transportpanzern ist bekannt, daß diese mit einer Kampfstofferfassungseinheit ausgerüstet sein können. Die Kampfstofferfassungseinheit besteht beispielsweise im wesentlichen aus einem, auf den Boden aufsetzbaren Doppelradspürgerät, einer Spürsonde mit Spürkopf und einem mit der Spürsonde verbundenen im Fahrzeug angeordneten Massenspektrometer. Die Räder des Doppelradspürgerätes sind jeweils an einem Schwenkarm befestigt, deren Bewegung vom Fahrzeug aus gesteuert werden kann.

Zur Bestimmung der Kontamination des Bodens wird ein Rad auf den Boden aufgesetzt und anschließend an den Spürkopf der Spürsonde geführt, so daß an der Lauffläche des Rades anhaftende Kontaminationen über die Spürsonde in das Massenspektrometer geleitet und hier detektiert werden können. Gleichzeitig kann das zweite Rad für eine erneute Probenahme auf den Boden aufgesetzt sein.

Befindet sich keines der Spürräder am Spürkopf der Sonde, besteht die Möglichkeit, Kontaminationen der Luft am Spürkopf aufzunehmen und im Massenspektrometer entsprechend zu erfassen.

Am Spürkopf verbleibende, durch den Kontakt mit den Laufrädern verursachte Kontaminationen können jedoch die Messung von weiteren Luft- und Bodenkontaminationen beeinflussen, so daß nicht mit hinreichender Sicherheit auf lokal unterschiedliche Kontaminationen geschlossen werden kann.

Der Erfindung liegt die Aufgabe zugrunde, die Meßsicherheit bei der Bestimmung von im Fahrzeugaußenbereich lokal unterschiedlich verteilten Kontaminationen zu erhöhen.

Erfindungsgemäß wird diese Aufgabe an einem, für einen solchen Einsatzzweck vorgesehenen, Fahrzeug dadurch gelöst, daß die Transporteinrichtung für das Stoffgemisch vom Stoffgemischaufnehmer zum Analysegerät als Hohlkörper ausgebildet ist, in dessen Hohlraum das zu analysierende Gemisch transportiert wird, daß die als Hohlkörper ausgebildete Transporteinrichtung durch die Außenwand des Fahrzeuges geführt ist und sich bis zu dem im Fahrzeug befindlichen Analysegerät erstreckt, und daß das analysegerätseitige Ende der als Hohlkörper ausgebildeten Transporteinrichtung ein Verschlußelement zum gasdichten Verschließen der Transporteinrichtung beim Trennen derselben vom Analysegerät aufweist.

Die Erfindung ist mit dem Vorteil verbunden, daß eine Transporteinrichtung, falls deren Innenwandung Kontaminationen anhaften, die zu fehlerhaften Meßergebnissen führen würden, vom Analysegerät getrennt und dabei endseitig verschlossen, aus dem Fahrzeug entfernt werden kann. Da der Druck im Innenraum des Fahrzeuges gegenüber dem äußeren Luftdruck erhöht ist, besteht die Möglichkeit, im Fahrzeug befindliche Ersatztransporteinrichtungen in die Fahrzeugaußenwand einzusetzen und mit dem Analysegerät zu verbinden, ohne daß kontaminierte Außenluft eindringen könnte.

Für weitere Meßaufgaben steht danach eine von Kontaminationen freie Transporteinrichtung zur Verfügung.

In bevorzugter Ausführung der Erfindung handelt es sich bei der als Hohlkörper ausgebildeten Transporteinrichtung um eine Schlauchleitung, deren analysegerätabgewandtes Ende den Stoffgemischaufnehmer bildet.

Die Schlauchleitungen können vorgeformt sein, um definierte Bereiche der Fahrzeugaußenfläche zu erfassen. Auch besteht die Möglichkeit, die fahrzeugabgewandten Endbereiche der Schlauchleitungen flexibel auszubilden, so daß eine Anpassung an das Bodenprofil gegeben ist und Kontaminationen des Bodens sicher aufgenommen werden können.

Zur Aufnahme von Schad- und Kampfstoffen auf vorbestimmtem Höhenniveaus kann die Schlauchleitung durch einen starren Stabilisierungskörper in ihrem Verlauf außerhalb des Fahrzeuges festgelegt sein. In weiterer Ausgestaltung der Erfindung verläuft die Schlauchleitung in einem starren, an der Fahrzeugaußenwand befestigten Ummantelungsrohr.

Befindet sich im Fahrzeug ein Meßschlauchvorrat, von dem Schlauchleitungen der erforderlichen Länge abtrennbar sind oder der als eine Anzahl von bereits auf Länge zugeschnittenen Schlauchleitungen vorliegt, kann über einen vergleichsweise langen Zeitraum ein störungsfreier Meßbetrieb aufrechterhalten werden, indem kontaminierte Schlauchleitungen zur Vermeidung von Meßfehlern jeweils durch Vorratsschlauchabschnitte ersetzt werden.

Zur Erfassung von Schad- und Kampfstoffkonzentrationen auf unterschiedlichen Höhenniveaus über dem Erdboden können mindestens zwei voneinander unabhängige, durch die Außenwand des Fahrzeuges geführte Hohlkörper Stoffgemische aus unterschiedlichen Höhen zu mindestens einem Analysegerät leiten. Da die im Fahrzeugaußenbereich beispielsweise bodennah und in Kopfhöhe durchgeführten Messungen unbeeinflußt voneinander erfolgen, sind die Meßergebnisse einem bestimmten Meßort zuordenbar.

Als Analysegerät zum Nachweis von Stoffgemischen kann erfindungsgemäß ein Ionenmobilitätsspektrometer Verwendung finden.

In zweckmäßiger Ausgestaltung einer bevorzugten Meßanordnung ist das Analysegerät aus einer Kombination von Ionenmobilitätsspektrometer und gaschromatographischer Trennsäule gebildet. Es besteht weiterhin die Möglichkeit, der gaschromatographischen Trennsäule, die der Trennung des Gemisches in die enthaltenen Stoffe dient, ein Ionenmobilitätsspektrometer nachzuschalten, dem einzelne Stoffe des Gemisches zur weiteren Bestimmung zugeleitet werden.

Zur Verbindung einer Transporteinrichtung für ein Stoffgemisch mit einem Analysegerät kann ein Adapter eingesetzt werden, der aus einem Hohlkörper und einem in den Hohlkörper einschiebbaren Verschlußelement besteht. Der Hohlkörper ist einseitig durch eine Hohlnadelaufnahme abgeschlossen, aus der eine Hohlnadel in den Hohlraum des Hohlkörpers ragt. Das Verschlußelement weist ein Septum auf, das bei im Hohlkörper fixiertem Verschlußelement von der Hohlnadel durchdrungen ist, so daß das Septum und damit das Verschlußelement gasdurchlässig sind.

Das Material des Septums wird zweckmäßig derart gewählt, daß die von der Hohlnadel erzeugte Öffnung im Septum nach Entfernen der Hohlnadel vom Septum geschlossen wird. Ist dabei das Verschlußelement für die Befestigung einer flexiblen Schlauchleitung ausgebildet und sind die Hohlnadelaufnahme und die Hohlnadel dem Analysegerät zugeordnet und mit diesem verbunden, können in der Schlauchleitung befindliche Kontaminationen nach dem Abziehen der Schlauchleitung vom Analysegerät nicht in den Innenraum des Fahrzeuges gelangen.

Die Erfindung soll nachfolgend anhand eines Ausführungsbeispieles mit zugehörigen Zeichnungen näher erläutert werden.

Es zeigen:
- Fig. 1: ein schematisch angedeutetes Fahrzeug mit einer zum Nachweis von Kampfstoffen geeigneten Ausrüstung,
- Fig. 2: eine Anordnung von Auswerte- und Analysegeräten aus der Sicht des Bedieners,
- Fig. 3: eine Darstellung der prinzipiellen Verknüpfung der Auswerte- und Analysegeräte,
- Fig. 4,5: einen Adapter zur Verbindung einer Schlauchleitung mit einem Analysegerät und
- Fig.6: eine Schlauchdurchführung durch die Fahrzeugaußenwand.

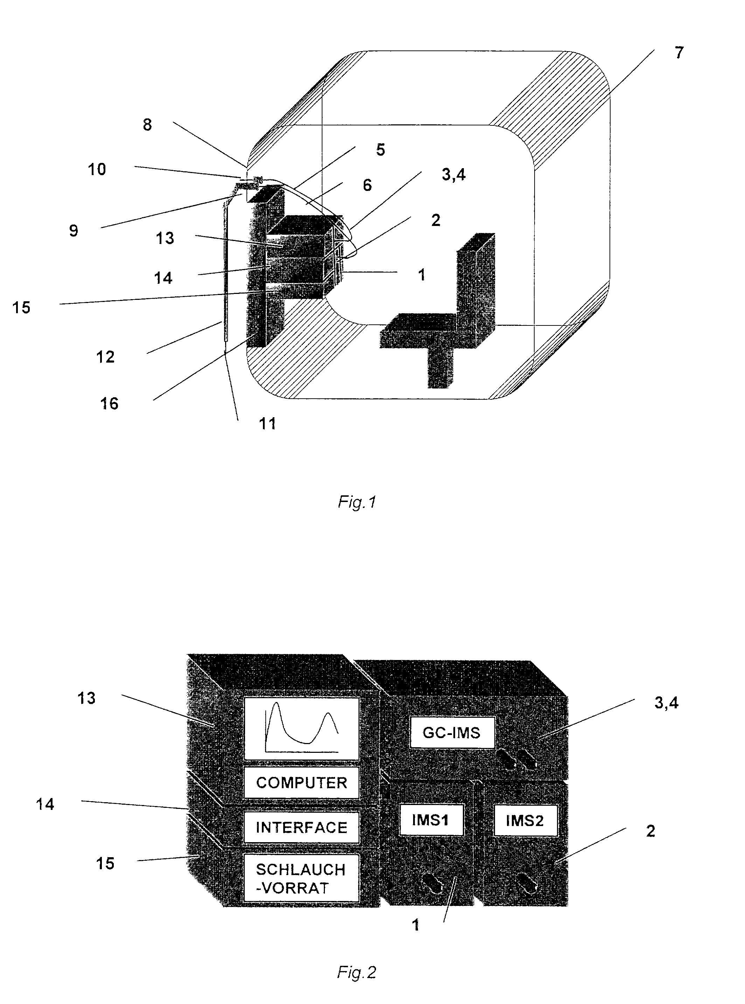

In dem in Fig.1 schematisch dargestellten Fahrzeug sind zum Nachweis von Schadstoffen zwei Ionenmobilitätsspektrometer 1,2 und eine gaschromatographische Trennsäule 3, der ein weiteres Ionenmobilitätsspektrometer 4 nachgeschaltet ist, angeordnet. Von den Ionenmobilitätsspektrometern 1,2 führen Schlauchleitungen 5,6, die aus Teflon, PE oder ähnlichen Materialien bestehen, durch in der Außenwand 7 des Fahrzeuges vorgesehene Durchbrüche 8,9 zu einem bodenfernen und einem bodennahen Schadstoffgemischaufnehmer 10,11. Die zu dem bodennahen Schadstoffaufnehmer 11 führende Schlauchleitung 6 verläuft innerhalb eines Rohres 12, in dem die Schlauchleitung 6 in die erforderliche Meßposition bewegt werden kann.

Die beiden Ionenmobilitätsspektrometer 1,2 und die gaschromatographische Trennsäule 3, sowie ein Steuerrechner 13, ein Interface 14 und ein Schlauchleitungsvorrat 15 (Fig.2) lagern auf einer schwingungsgedämpften Grundplatte und sind mittels eines Halterahmens 16 (Fig.1) starr an der Außenwand 7 des Fahrzeuges befestigt.

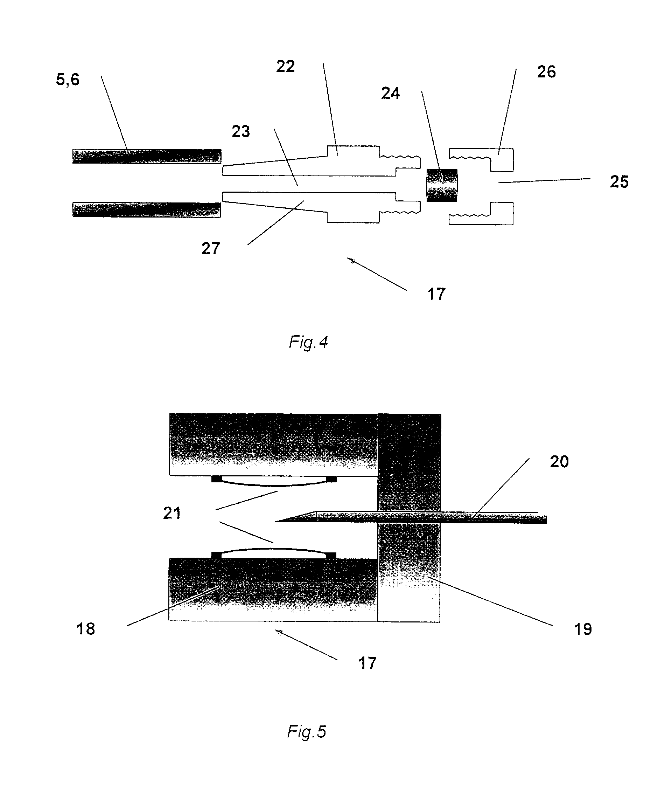

Zur Verbindung der Schlauchleitung 5,6 mit den Ionenmobilitätsspektrometern 1,2 bzw. mit der gaschromatographischen Trennsäule 3 kommt ein Adapter 17 zum Einsatz, der geräteseitig als Hohlkörper 18 ausgebildet und durch eine Hohlnadelaufnahme 19 abgeschlossen ist, aus der eine Hohlnadel 20 in den Hohlraum des Hohlkörpers 18 ragt (Fig.5).

Die an der Wand des Hohlraumes des Hohlkörpers 18 angeordneten Federklemmen 21 dienen der Fixierung eines schlauchseitigen Verbindungselementes 22 mit innenliegendem Kanal 23, der durch ein gasdichtes Septum 24 abgeschlossen ist. Das Septum 24 besteht aus einem Material, wie etwa Teflon oder PE, das von der Hohlnadel 20 durchdrungen werden kann und an dieser dichtend anliegt sowie nach Entfernen der Hohlnadel 20 die Öffnung wieder gasdicht verschließt. Es ist durch eine mit einer Bohrung 25 versehene Überwurfmutter 26 in das Verbindungselement 22 dichtschließend eingepreßt. Das schlauchseitige Endstück 27 des Verbindungselementes 22 ist für ein Aufschieben der Schlauchleitung 5,6 und die Befestigung derselben entsprechend ausgebildet (Fig.4).

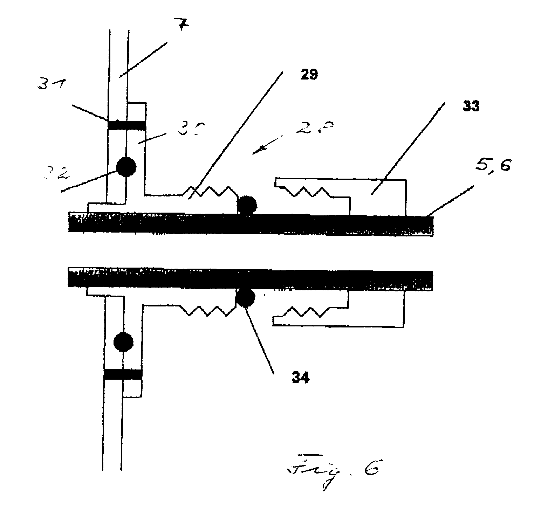

Eine Durchführung 28 der Schlauchleitung 5,6 durch die Außenwand 7 des Fahrzeuges ist in Fig.6 näher dargestellt. Der Durchführungsgrundkörper 29 weist einen Flansch 30 auf, der mittels Nieten 31 an der Fahrzeugaußenwand 7 befestigt ist. Zur Vermeidung des Eindringens von Außenluft in das Fahrzeuginnere kommt eine zwischen dem Flansch 30 und der Fahrzeugaußenwand 7 angeordnete Quetschdichtung 32 zum Einsatz. Die den Durchführungsgrundkörper 29 durchragende Schlauchleitung 5,6 wird durch eine Überwurfmutter 33, die auf eine an der Stirnseite des Durchführungsgrundkörpers 29 anliegende Quetschdichtung 34 wirkt, fixiert, so daß auch an der Schlauchaußenwand ein Eindringen kontaminierter Außenluft zuverlässig verhindert wird.

Über den beschriebenen Adapter 17 sind die Schlauchleitungen 5,6 mit den Ionenmobilitätsspektrometern 1 und 2 verbunden. Die gaschromatographische Trennsäule 3 besitzt ein gegenüber den Ionenmobilitätsspektrometern 1,2 modifiziertes Injektionsmodul zur Probenaufgabe und Trägergasversorgung. Dieses Modul saugt im Meßbetrieb durch eine Öffnung Luft aus dem Innenraum des Fahrzeuges an und führt diese über Filter der gaschromatographischen Trennsäule 3 als Trägergas zu. Ein solches Injektionsmodul ist dem Fachmann bekannt und muß daher nicht näher beschrieben werden. Am Injektionsmodul ist der Hohlkörper 18 eines Adapters 17 vorgesehen, so daß jeweils eine der Schlauchleitungen 5,6 angeschlossen werden können. Durch ein steuerbares Mehrwegeventil wird wahlweise das Trägergas oder aber das in der Schlauchleitung 5,6 befindliche Schadstoffgemisch dem Eingang der gaschromatographischen Trennsäule 3 zugeführt. Die Auswertung der einzelnen Schadstoffe des Gemisches erfolgt im nachgeschalteten Ionenmobilitätsspektrometer 4.

Der Datenaustausch zwischen den einzelnen Komponenten und dem Steuerrechner 13 erfolgt durch ein geeignetes Rechner-Interface 14.

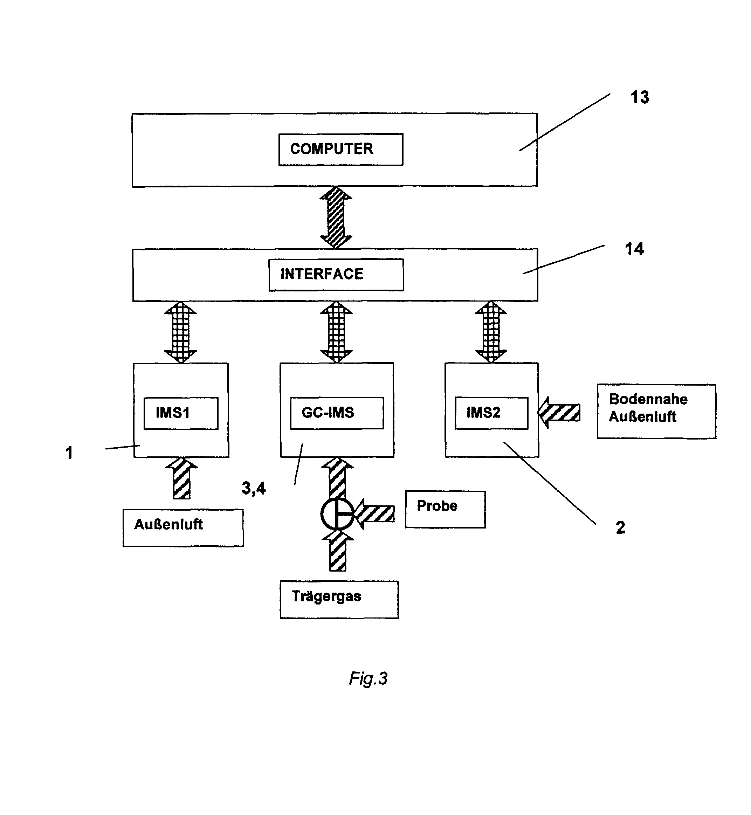

Die prinzipielle Verknüpfung der einzelnen Baugruppen einer geeigneten Meßanordnung ist Fig.3 zu entnehmen.

Der Betrieb der Meßanordnung erfolgt in einem permanenten Überwachungsmodus, in dem die Ionenmobilitätsspektrometer 1 und 2 ständig bodennah und bodenfern aufgenommene Schadstoffgemische analysieren. Sobald in einem der Ionenmobilitätsspektrometer 1,2 eine vorgegebene Triggerschwelle überschritten ist, erhält der Steuerrechner 13 ein Signal, das den Bediener auffordert, in den Analysemodus überzugehen. Hierzu wird die betreffende Schlauchleitung 5,6 vom Ionenmobilitätsspektrometer 1 oder 2 getrennt und mit der gaschromatographischen Trennsäule 3 verbunden. Nach Abschluß der Probenaufgabe wird die mit Schadstoff angereicherte Luft aus der Hohlnadel 20 in die Schlauchleitung 5 bzw. 6 zurückgespült, so daß die mit Schadstoff angereicherte Luft aus der Hohlnadel 20 entfernt und damit eine Kontamination des Innenraumes des Fahrzeuges vermieden wird.

Zum Wechsel einer Schlauchleitung 5,6 wird ebenfalls die Rückspülfunktion des Ionenmobilitätsspektrometers 1,2 ausgelöst. Danach kann die verunreinigte Schlauchleitung 5,6 von der Hohlnadelaufnahme 19, in der sie während des Meßvorganges befestigt war, abgezogen und durch die Außenwand 7 des Fahrzeuges nach außen gedrückt werden. Eine Schlauchleitung des Schlauchvorrates 15 wird daraufhin in die Hohlnadelaufnahme 19 unter leichtem Druck eingesetzt, so daß die Hohlnadel 20 das Septum 24 durchdringt und den Gasfluß zum Analysegerät ermöglicht.

## Patentansprüche

1. Fahrzeug zum Nachweis von Stoffgemischen, insbesondere Schadstoff- und Kampfstoffgemischen, mit einem Stoffgemischaufnehmer, einem im Fahrzeug befindlichen Analysegerät und einer Transporteinrichtung für das Stoffgemisch vom Stoffgemischaufnehmer zum Analysegerät, dadurch gekennzeichnet, daß die Transporteinrichtung als Hohlkörper (5,6) ausgebildet ist, in dessen Hohlraum das zu analysierende Gemisch transportiert wird, daß die als Hohlkörper (5,6) ausgebildete Transporteinrichtung durch die Außenwand (7) des Fahrzeuges geführt ist und sich bis zu dem im Fahrzeug befindlichen Analysegerät (1,2,3,4) erstreckt, und daß das analysegerätseitige Ende der als Hohlkörper (5,6) ausgebildeten Transporteinrichtung ein Verschlußelement (22,24,26) zum gasdichten Verschließen der Transporteinrichtung beim Trennen derselben vom Analysegerät (1,2,3,4) aufweist.

2. Fahrzeug nach Anspruch 1, dadurch gekennzeichnet, daß es sich bei dem Hohlkörper um eine Schlauchleitung (5,6) handelt, deren analysegerätabgewandtes Ende den Stoffgemischaufnehmer (10,11) bildet.

3. Fahrzeug nach Anspruch 2, dadurch gekennzeichnet, daß die Schlauchleitung (6) durch einen starren Stabilisierungskörper (12) in ihrem Verlauf außerhalb des Fahrzeuges und in der Höhe, in der das Schadstoff- oder Kampfstoffgemisch aufgenommen wird, festgelegt ist.

4. Fahrzeug nach Anspruch 3, dadurch gekennzeichnet, daß die Schlauchleitung (6) in einem starren, an der Fahrzeugaußenwand (7) befestigten Ummantelungsrohr (12) verläuft.

5. Fahrzeug nach Anspruch 2, dadurch gekennzeichnet, daß sich im Fahrzeug ein Meßschlauchvorrat (15) befindet, von dem Schlauchleitungen (5,6) der erforderlichen Länge abtrennbar sind oder der als eine Anzahl von bereits auf Länge zugeschnittenen Schlauchleitungen (5,6) vorliegt, wobei diese zum Ersetzen einer kontaminierten Schlauchleitung (5,6) bereitgehalten werden.

6. Fahrzeug nach Anspruch 1, dadurch gekennzeichnet, daß mindestens zwei voneinander unabhängige, durch die Außenwand (7) des Fahrzeuges geführte Hohlkörper (5,6) Stoffgemische aus unterschiedlichen Höhen über dem Erdboden zu mindestens einem Analysegerät (1,2,3,4) leiten.

7. Fahrzeug nach Anspruch 1, dadurch gekennzeichnet, daß als Analysegerät ein Ionenmobilitätsspektrometer (1,2) Verwendung findet.

8. Fahrzeug nach Anspruch 7, dadurch gekennzeichnet, daß das Analysegerät aus einer Kombination von Ionenmobilitätsspektrometer (1,2) und gaschromatographischer Trennsäule (3) gebildet ist.

9. Fahrzeug nach Anspruch 8, dadurch gekennzeichnet, daß der gaschromatographischen Trennsäule (3), die der Trennung des Gemisches in die enthaltenen Stoffe dient, ein Ionenmobilitätsspektrometer (4) nachgeschaltet ist, dem einzelne Stoffe des Gemisches zur weiteren Bestimmung zugeleitet werden.

10. Fahrzeug nach Anspruch 1, dadurch gekennzeichnet, daß zwischen der Transporteinrichtung (5,6) und dem Analysegerät (1,2,3) ein Adapter (17) angeordnet ist, der analysegerätseitig durch eine Hohlnadelaufnahme (19) abgeschlossen ist, aus der eine Hohlnadel (20) in den Hohlraum des Hohlkörpers (18) ragt, und der ein Verschlußelement (22,24,26) mit gasdichtem Septum (24) zum Verschließen der Transporteinrichtung (5,6) aufweist, das in den Hohlkörper (18) einschiebbar und in diesem derart fixierbar ist, daß die Hohlnadel (20) das Septum (24) durchdringt, so daß das Septum (24) und damit das Verschlußelement (22,24,26) gasdurchlässig sind.

11. Fahrzeug nach Anspruch 10, dadurch gekennzeichnet, daß das Material des Septums (24) derart gewählt ist, daß die von der Hohlnadel (20) erzeugte Öffnung im Septum (24) nach Entfernen der Hohlnadel (20) vom Septum (24) geschlossen wird.

12. Fahrzeug nach Anspruch 10 oder 11, dadurch gekennzeichnet, daß das Verschlußelement (22,24,26) für die Befestigung einer flexiblen Schlauchleitung (5,6) ausgebildet ist und daß die Hohlnadelaufnahme (19) und die Hohlnadel (20) dem Analysegerät (1,2,3) zugeordnet und mit diesem verbunden sind.
